# FASCICULE DE BREVET EUROPEEN

(11) **EP 3 878 755 B1**
(45) Date de publication et mention de la délivrance du brevet: **07.05.2025**
(21) Numéro de dépôt: 21157382.9
(22) Date de dépôt: 16.02.2021
(51) Int. Cl.: B64D 43/00, G01N 15/02, G01N 1/22

(54) **SYSTÈME D'ÉCHANTILLONNAGE ET D'ANALYSE DE TRAÎNÉE DE CONDENSATION GÉNÉRÉE PAR UN AÉRONEF**
SYSTEM ZUR PROBENAHME UND ANALYSE DER VON EINEM FLUGZEUG ERZEUGTEN KONDENSSTREIFEN
SYSTEM FOR SAMPLING AND ANALYSING CONDENSATION DRAG GENERATED BY AN AIRCRAFT

(30) Priorité: 11.03.2020 FR 2002415
(43) Date de publication de la demande: 15.09.2021
(73) Titulaire: Airbus SAS, 31700 Blagnac (FR)
(72) Inventeur: FAROUZ-FOUQUET, Mathias, 31700 BLAGNAC (FR)
(74) Mandataire: Gevers & Orès

(56) Documents cités:
- EP-A1- 2 860 374
- US-A1- 2013 110 326
- A PETZOLD: "Near-field measurements on contrail properties from fuels with different sulfur content", 31 December 1997 (1997-12-31), pages 29867 - 59880, XP055745513, Retrieved from the Internet <URL:https://elib.dlr.de/32388/1/petz.pdf> [retrieved on 20201030]
- C. VOIGT ET AL: "In-situ observations of young contrails - overview and selected results from the CONCERT campaign", ATMOSPHERIC CHEMISTRY AND PHYSICS, vol. 10, no. 18, 1 January 2010 (2010-01-01), pages 9039 - 9056, XP055745383, DOI: 10.5194/acp-10-9039-2010

## Description

### DOMAINE TECHNIQUE

La présente invention concerne l'analyse des traînées de condensation (« contrails » ou « condensation trail » en anglais) générées par un aéronef. En particulier, elle concerne l'analyse et l'échantillonnage de traînée de condensation générée par un aéronef.

### ÉTAT DE LA TECHNIQUE

La mesure d'émissions générées par les réacteurs (« jet engine » en anglais) d'un aéronef en vol revêt un caractère important pour la compréhension de la contribution de ces émissions dans le changement climatique terrestre. Elle sera nécessaire pour l'étude des carburants de nouvelle génération, tels que les biocarburants ou l'hydrogène. En particulier, la compréhension de la contribution des traînées de condensation sur le changement climatique terrestre est également importante.

Pour l'analyse des traînées de condensation, on pourrait envisager d'utiliser un deuxième aéronef équipé de sondes de collecte qui collectent des échantillons d'air et de cristaux de glace des traînées de condensation générées par un aéronef le précédant. Or, placer un aéronef dans l'écoulement de réacteur d'un aéronef le précédant peut se révéler peu efficace et onéreux du fait de l'utilisation du deuxième aéronef. Un tel exemple peut être trouvé dans A. Petzold: "Near-field measurements on contrail properties from fuels with different sulfur content", 31 décembre 1997 (1997-12-31), pages 29867-59880.

### EXPOSÉ DE L'INVENTION

La présente invention a pour objet de pallier ces inconvénients en proposant un système et un procédé d'échantillonnage et d'analyse de traînées de condensation.

À cet effet, l'invention concerne un système d'échantillonnage et d'analyse de traînée de condensation générée par au moins un réacteur d'un aéronef en vol. Selon l'invention, le système est configuré pour être embarqué à bord de l'aéronef et comprend au moins :
- une sonde de collecte configurée pour collecter des échantillons de la traînée de condensation générée par ledit réacteur dudit aéronef en vol ;
- un dispositif de fixation, la sonde de collecte étant configurée pour être fixée sur l'aéronef par le dispositif de fixation, le dispositif de fixation comprenant :
   - un support configuré pour être fixé sur le fuselage de l'aéronef et
   - un module de déplacement fixé sur le support, dans lequel le module de déplacement est configuré pour déplacer la sonde de collecte par rapport à l'aéronef vers une position dans laquelle la sonde de collecte se trouve dans la traînée de condensation ;
- une chambre de collecte configurée pour recueillir les échantillons collectés par la sonde de collecte ;
- un tube de collecte configuré pour conduire les échantillons de la sonde de collecte vers la chambre de collecte ;
- au moins un premier dispositif de mesure configuré pour mesurer au moins un paramètre caractérisant les échantillons dans le tube de collecte pendant que lesdits échantillons sont conduits de la sonde de collecte vers la chambre de collecte.

Ainsi, grâce au système configuré pour être embarqué à bord de l'aéronef, il n'est pas nécessaire d'utiliser un deuxième aéronef à l'arrière du premier aéronef afin de collecter des échantillons des traînées de condensation générées par le premier aéronef.

De plus, le système comprend une pompe à vide configurée pour entraîner les échantillons de la sonde de collecte à la chambre de collecte.

En outre, le système comprend un dispositif de régulation de température configuré pour maintenir l'intérieur du tube de collecte à une température de fonctionnement souhaitée.

Par ailleurs, le dispositif de régulation de température comprend un tube isolant enveloppant au moins en partie le tube de collecte, le tube isolant étant configuré pour faire circuler un fluide frigorigène ou un mélange de fluide frigorigène et d'air entre le tube de collecte et le tube isolant.

De plus, le ou chacun des premiers dispositifs de mesure comprend une première unité de mesure configurée pour déterminer au moins un paramètre caractéristique d'une composition chimique des échantillons.

En outre, le ou chacun des premiers dispositifs de mesure comprend une deuxième unité de mesure configurée pour déterminer au moins un paramètre caractéristique d'une granulométrie de particules contenus dans les échantillons.

Avantageusement, la chambre de collecte est configurée pour être maintenue à une température de conservation des échantillons recueillis dans la chambre de collecte.

Par ailleurs, le système comprend au moins un deuxième dispositif de mesure configuré pour mesurer au moins un paramètre caractéristique des échantillons recueillis dans la chambre de collecte.

De plus, le ou chacun des deuxièmes dispositifs de mesure comprend une troisième unité de mesure configurée pour déterminer un paramètre caractéristique d'une composition chimique des échantillons.

En outre, le ou chacun des deuxièmes dispositifs de mesure comprend une quatrième unité de mesure configurée pour déterminer un paramètre caractéristique de propriétés optiques des échantillons.

Selon un premier mode de réalisation, le module de déplacement comprend une tige rétractable présentant une première extrémité à laquelle est fixée la sonde de collecte, la tige rétractable étant configurée pour prendre alternativement au moins une première configuration dans laquelle la tige rétractable est déployée pour amener la sonde de collecte dans une première position dans laquelle la sonde de collecte se trouve dans la traînée de condensation et une deuxième configuration dans laquelle la tige rétractable est rétractée pour éloigner la sonde de collecte de la traînée de condensation dans une deuxième position.

Selon un deuxième mode de réalisation, le module de déplacement comprend une tige articulée, la tige articulée présentant une première extrémité comprenant une articulation fixée au support et une deuxième extrémité à laquelle la sonde de collecte est fixée, l'articulation étant configurée pour déplacer la sonde de collecte alternativement au moins entre une troisième position dans laquelle la sonde de collecte se trouve dans la traînée de condensation et une quatrième position dans laquelle la sonde de collecte est écartée de la traînée de condensation.

L'invention concerne également un procédé d'utilisation du système d'échantillonnage et d'analyse de traînée de condensation générée par au moins un réacteur d'un aéronef en vol tel que celui décrit ci-dessus.

Selon l'invention le procédé comprend les étapes suivantes :
- une étape de collecte, par la sonde de collecte, d'échantillons de la traînée de condensation générée par ledit réacteur dudit aéronef en vol ;
- une étape de conduite, par le tube de collecte, des échantillons collectés par la sonde de collecte vers la chambre de collecte ;
- au moins une étape de mesure par le ou les premiers dispositifs de mesure d'au moins un paramètre caractéristique des échantillons dans le tube de collecte pendant qu'ils sont conduits de la sonde de collecte vers la chambre de collecte ;
- une étape de collecte dans la chambre de collecte des échantillons collectés par la sonde de collecte et conduits par le tube de collecte.

L'invention concerne également un aéronef, en particulier un avion de transport, comportant un système d'échantillonnage et d'analyse tel que celui spécifié ci-dessus.

### BRÈVE DESCRIPTION DES FIGURES

L'invention, avec ses caractéristiques et avantages, ressortira plus clairement à la lecture de la description faite en référence aux dessins annexés dans lesquels :
La figure 1 représente une vue de dessus d'un aéronef en vol générant des trainées de condensation et embarquant un système d'échantillonnage et d'analyse.
La figure 2 représente une vue en perspective d'un aéronef en vol embarquant un système d'échantillonnage et d'analyse selon un mode de réalisation.
La figure 3 représente une vue en perspective d'un aéronef en vol embarquant un système d'échantillonnage et d'analyse selon un autre mode de réalisation.
La figure 4 représente une vue de face d'un aéronef embarquant un système d'échantillonnage et d'analyse dont la sonde de collecte est placée dans la traînée de condensation.
La figure 5 représente une vue de profil d'un aéronef embarquant un système d'échantillonnage et d'analyse dont la sonde de collecte est placée dans la traînée de condensation.
La figure 6 représente schématiquement le procédé d'utilisation du système d'échantillonnage et d'analyse.

### DESCRIPTION DÉTAILLÉE

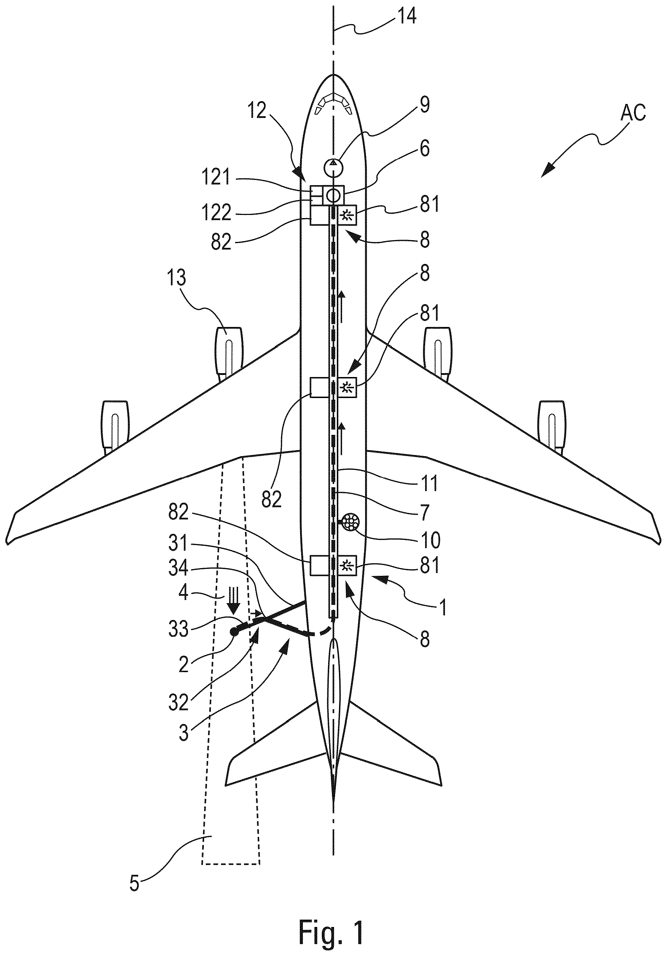

La figure 1 représente le système 1 d'échantillonnage et d'analyse de traînée de condensation 5 générée par au moins un réacteur 13 d'un aéronef AC en vol. Dans la suite de la description, le système d'échantillonnage et d'analyse est appelé « système 1 ».

Le système, configuré pour être embarqué sur l'aéronef AC, comprend une sonde de collecte 2 configurée pour être fixée sur l'aéronef AC par un dispositif de fixation 3. La sonde de collecte est également apte à collecter des échantillons 4 de la traînée de condensation 5. Dans la figure 1, les échantillons 4 sont représentés schématiquement par une flèche indiquant leur sens de déplacement par rapport à l'aéronef AC.

Généralement, les échantillons 4 de la traînée de condensation 5 contiennent des éléments de la traînée de condensation 5. Ainsi, les échantillons comprennent au moins un des éléments suivants : des cristaux de glace, des résidus de carburants imbrûlés (HC), de l'oxygène (O₂), de l'ozone (O₃), du monoxyde de carbone (CO), du dioxyde de carbone (CO₂), des oxydes d'azote (NOₓ).

Avantageusement, la sonde de collecte 2 comprend une vanne permettant d'empêcher ou d'autoriser la collecte des échantillons 4.

Le système 1 permet donc de pouvoir prendre des échantillons 4 directement dans la traînée de condensation 5. En effet, la sonde de collecte 2 peut être agencée directement dans la traînée de condensation 5 générée par le réacteur de l'aéronef sur lequel est intégré ledit système 1.

Le système 1 comprend également une chambre de collecte 6 configurée pour recueillir les échantillons 4 collectés par la sonde de collecte 2 et un tube de collecte 7 (représenté en ligne pointillée sur la figure 1) configuré pour conduire les échantillons 4 de la sonde de collecte 2 vers la chambre de collecte 6.

Le système 1 peut être installé à bord de l'aéronef AC de la manière suivante. La sonde de collecte 2 est configurée pour être fixée à l'aéronef AC sur une partie du fuselage de l'aéronef AC à l'arrière du ou des réacteurs 13 de l'aéronef AC dans le sens de déplacement de l'aéronef AC. Le tube de collecte 7 est configuré pour être installé parallèlement à un axe longitudinal 14 de l'aéronef AC à bord de l'aéronef AC. La chambre de collecte 6 est configurée pour être installée dans une partie de l'aéronef AC à l'avant du ou des réacteurs 13.

De façon non limitative, le tube de collecte 7 peut présenter une longueur comprise entre une longueur sensiblement égale à la moitié de la longueur de l'aéronef AC et une longueur sensiblement égale au tiers de la longueur de l'aéronef AC.

La longueur du tube de collecte 7 permet d'observer l'évolution des échantillons 4, en particulier des cristaux de glace, en temps et en distance, comme si les mesures des paramètres étaient réalisées dans une zone à l'arrière l'aéronef AC dans laquelle la traînée de condensation 5 est complètement formée et dans laquelle les cristaux de glace contenus dans les échantillons 4 ont leur taille finale et leur composition chimique finale.

Par ailleurs, en connaissant le type de carburant consommé par l'aéronef AC en vol et les conditions de vol, il est possible de mesurer la formation graduelle de cristaux de glace dans la traînée de condensation 5 en fonction du type de carburant et des conditions de vol.

Afin d'entraîner les échantillons 4 dans le tube de collecte 7 de la sonde de collecte 2 à la chambre de collecte 6, le système 1 peut comprendre une pompe à vide 9. La pompe à vide 9 permet de faire le vide dans le tube de collecte 7 afin d'aspirer les échantillons 4 par la sonde de collecte 2 et les entraîner dans la chambre de collecte 6 par aspiration. Par ailleurs, le système 1 peut comprendre un régulateur de débit configuré pour réguler le débit des échantillons 4 dans le tube de collecte 7 aspirés par la pompe à vide 9. Selon un exemple particulier, la pompe à vide 9 peut jouer le rôle de régulateur de débit par une régulation du débit de pompage de la pompe à vide 9.

Le système 1 présente en outre au moins un dispositif de mesure 8 configuré pour mesurer au moins un paramètre caractérisant les échantillons 4 dans le tube de collecte 7 pendant qu'ils sont conduits de la sonde de collecte 2 vers la chambre de collecte 6.

Le système 1 peut comprendre une pluralité de dispositifs de mesure 8 repartis le long du tube de collecte 7. La figure 1 montre un exemple du système 1 présentant trois dispositifs de mesure 8 dont un dispositif de mesure 8 disposé au voisinage de la sonde de collecte 2, un dispositif de mesure disposé au voisinage de la chambre de collecte 6 et un dispositif de mesure 8 disposé sensiblement au milieu du tube de collecte 7.

Le ou chacun des dispositifs de mesure 8 peut comprendre une unité de mesure 81 configurée pour déterminer au moins un paramètre caractéristique d'une composition chimique des échantillons 4. L'unité de mesure 81 peut contenir un spectromètre.

Le ou chacun des dispositifs de mesure 8 peut en outre comprennent une unité de mesure 82 configurée pour déterminer au moins un paramètre caractéristique d'une granulométrie de particules, telles que des cristaux de glace, contenues dans les échantillons 4. L'unité de mesure 82 peut contenir un capteur granulométrique 82.

Ainsi, le spectromètre 81 permet d'analyser la composition chimique des échantillons 4. Le capteur granulométrique 82 permet de compter les particules contenues dans les échantillons 4 et de déterminer la taille de ces particules.

Par ailleurs, en connaissant le type de carburant consommé par l'aéronef AC en vol et les conditions de vol, il est possible de mesurer la concentration de particules 4 en fonction du type de carburant et des conditions de vol.

Le système peut comprendre également au moins un dispositif de mesure 12 configuré pour mesurer au moins un paramètre caractéristique des échantillons 4 recueillis dans la chambre de collecte 6.

Le ou chacun des dispositifs de mesure 12 peut comprendre une unité de mesure 121 configurée pour déterminer un paramètre caractéristique d'une composition chimique des échantillons 4, en particulier des cristaux de glace contenus dans les échantillons 4.

Le ou chacun des dispositifs de mesure 12 peut comprendre en outre une unité de mesure 122 configurée pour déterminer un paramètre caractéristique de propriétés optiques des échantillons 4, en particulier des cristaux de glace contenus dans les échantillons 4. Les propriétés optiques déterminées peuvent être l'absorption infrarouge ou la réflectivité des échantillons 4.

Ainsi, il est possible d'analyser en vol les propriétés optiques des cristaux de glace générés dans les traînées de condensation 5.

L'unité de mesure 121 et l'unité de mesure 122 peuvent contenir chacun un spectromètre.

Avantageusement, le dispositif de fixation 3 de la sonde de collecte 2 peut comprendre un support 31 configuré pour être fixé sur le fuselage de l'aéronef AC et un module de déplacement 32 fixé sur le support 31. Le module de déplacement 32 est configuré pour déplacer la sonde de collecte 2 par rapport à l'aéronef AC. Le support de fixation 3 peut être formé de poutres montées en pyramide comportant au moins trois faces. Par exemple, la base de la pyramide est fixée au fuselage et le module de déplacement 32 est fixé au sommet de la pyramide.

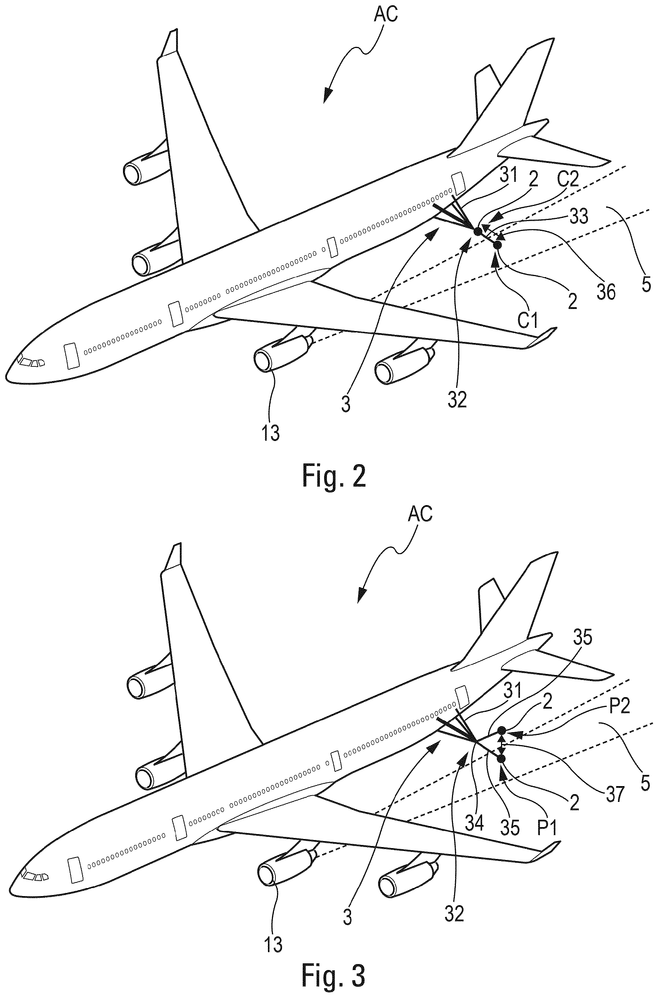

Selon un premier mode de réalisation (figure 2), le module de déplacement 32 comprend une tige rétractable 33 présentant une première extrémité à laquelle est fixée la sonde de collecte 2 et une deuxième extrémité fixée au support 31. La tige rétractable 33 est configurée pour prendre alternativement au moins une configuration dans laquelle la tige rétractable 33 est déployée pour amener la sonde de collecte 2 dans une position C1 dans laquelle la sonde de collecte 2 se trouve dans la traînée de condensation 5 et une configuration dans laquelle la tige rétractable 33 est rétractée pour éloigner la sonde de collecte 2 de la traînée de condensation 5 dans une position C2. La figure 2 représente les deux positions C1 et C2 de la sonde de collecte 2. Dans la position C1 de la sonde de collecte 2, la tige rétractable 33 se trouve dans la configuration dans laquelle elle est déployée, alors que, dans la position C2 de la sonde de collecte 2, la tige rétractable 33 se trouve dans la configuration dans laquelle elle est rétractée. Sur la figure 3, la double flèche 36 indique le passage de la position C1 à la position C2 et inversement.

Selon un deuxième mode de réalisation (figure 3), le module de déplacement 32 comprend une tige articulée 35. La tige articulée 35 présente une première extrémité comprenant une articulation 34 fixée au support 31. La tige articulée 35 présente une deuxième extrémité à laquelle la sonde de collecte 2 est fixée. L'articulation 34 est configurée pour déplacer la sonde de collecte 2 alternativement au moins entre une position P1 dans laquelle la sonde de collecte 2 se trouve dans la traînée de condensation 5 et une position P2 dans laquelle la sonde de collecte 2 est écartée de la traînée de condensation 5. La figure 3 montre les deux positions P1 et P2 de la sonde de collecte 2. La référence P1 montre la position de la sonde de collecte 2 se trouvant dans la traînée de condensation 5 alors que la référence P2 montre la position de la sonde de collecte 2 écartée de la traînée de condensation 5. Sur la figure 3, la double flèche 37 indique le passage de la position P1 à la position P2 et inversement. Selon une configuration, le module de déplacement 32 peut également amener la tige articulée 35 dans une autre position (non représentée) dans laquelle la sonde de collecte 2 se trouve dans une traînée de condensation d'un autre réacteur de l'aéronef AC.

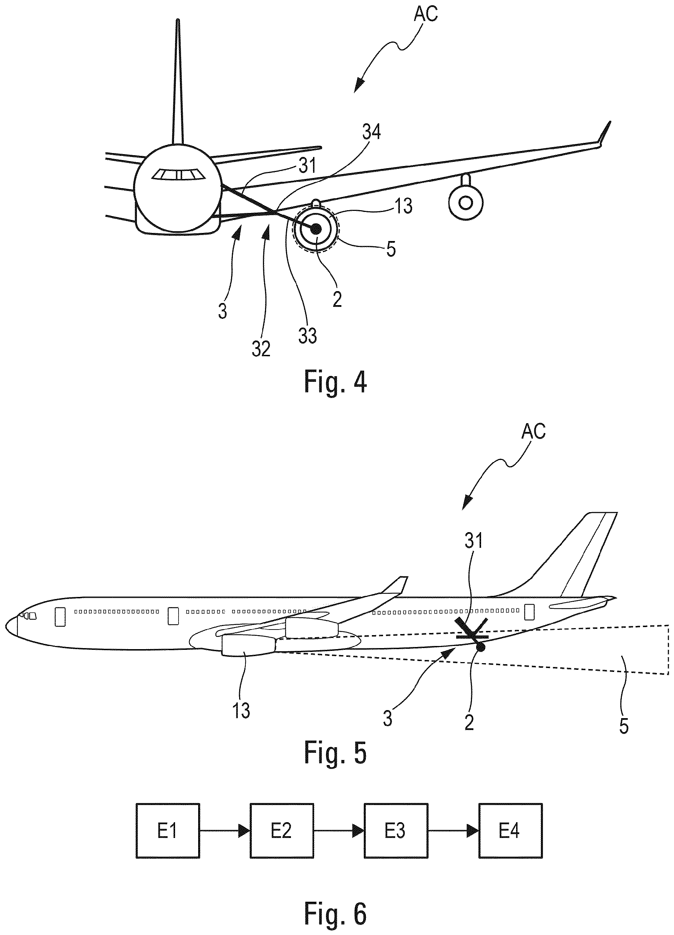

Les figures 4 et 5 représentent la sonde de collecte 2 dans la position P1 ou la position C1.

D'autres modes de réalisation peuvent être envisagés. À titre d'exemple, la tige articulée 35 du deuxième mode de réalisation peut être une tige rétractable, telle que la tige rétractable 33 du premier mode de réalisation.

Avantageusement, le système 1 comprend en outre un dispositif de régulation de température 10 configuré pour maintenir l'intérieur du tube de collecte 7 à une température de fonctionnement souhaitée. La température de fonctionnement peut être égale à une température extérieure de l'aéronef AC.

Le dispositif de régulation de température 10 peut comprendre un tube isolant 11 (représenté en trait plein sur la figure 1) enveloppant au moins en partie le tube de collecte 7. Le tube isolant 11 est configuré pour faire circuler entre le tube de collecte 7 et le tube isolant 11 un fluide frigorigène ou un mélange de fluide frigorigène et d'air. Par exemple, l'air avec lequel le fluide frigorigène est mélangé peut provenir de l'intérieur de la cabine de l'aéronef AC. L'air à l'intérieur de la cabine de l'aéronef est généralement plus chaud que le fluide frigorigène. Le dispositif de régulations de température 10 peut ainsi réguler la température dans le tube de collecte 7. La régulation de température peut être réalisée en régulant le débit du liquide frigorigène ou en régulant le débit dudit mélange de fluide frigorigène et d'air entre le tube isolant 11 et le tube de collecte 7. Alternativement ou complémentairement, la régulation de température peut être réalisée en modifiant les proportions du mélange entre le fluide frigorigène et l'air.

À titre d'exemple, le fluide frigorigène peut être de l'azote liquide.

La formation de cristaux de glace dans la traînée de condensation 5 dépend de la température du milieu dans lequel elle se propage. Par exemple, en sortie du réacteur 13, le milieu est très chaud puis se refroidit au fur et à mesure que l'on s'éloigne du réacteur 13. Les cristaux de glace se forment lors du refroidissement. La régulation de température dans le tube de collecte 7 permet de simuler les changements de température du milieu dans lequel la traînée de condensation se propage. Ainsi, il est possible de reproduire dans le tube de collecte 7 l'évolution de la formation des cristaux de glace dans une traînée de condensation 5.

Par ailleurs, la chambre de collecte 6 peut être configurée pour être maintenue à une température de conservation des cristaux de glace contenus dans les échantillons 4 recueillis dans la chambre de collecte 6. Le dispositif de régulation de température 10 peut participer au maintien de la température de conservation des cristaux de glace des échantillons 4 dans la chambre de collecte 6.

Ainsi, il est possible de simuler différentes conditions atmosphériques en changeant la température à l'intérieur du tube de collecte 7.

Le système 1 peut également comprendre au moins une unité de calcul et une mémoire (non représentée). L'unité de calcul permet de gérer le système 1 en synchronisant, par exemple, la pompe à vide 9, les dispositifs de mesure 8 et 12 et le dispositif de régulation de température 10. La mémoire permet, par exemple, de mémoriser les paramètres mesurés par les dispositifs de mesure 8 et 12 ainsi que les conditions de mesure des paramètres. Les paramètres mesurés peuvent être envoyés à un dispositif utilisateur pour être traités. L'unité de calcul peut aussi traiter les paramètres mesurés.

L'invention concerne également un procédé d'utilisation du système 1 (figure 6).

Le procédé comprend les étapes suivantes :
- une étape E1 de collecte, par la sonde de collecte 2, d'échantillons 4 de la traînée de condensation 5 ;
- une étape E2 de conduite, par le tube de collecte 7, des échantillons 4 collectés par la sonde de collecte 2 vers la chambre de collecte 6 ;
- au moins une étape E3 de mesure par le ou les dispositifs de mesure 8 d'au moins un paramètre caractéristique des échantillons 4 dans le tube de collecte 7 pendant qu'ils sont conduits de la sonde de collecte 2 vers la chambre de collecte 6 ;
- une étape E4 de collecte dans la chambre de collecte 6 des échantillons 4 collectés par la sonde de collecte 2 et conduits par le tube de collecte 7.

De préférence, l'étape E1 de collecte est précédée d'une étape de préparation. L'étape de préparation peut comprendre les sous-étapes suivantes :
- une sous-étape de mise à vide, mise en œuvre par la pompe à vide 9, consistant à mettre à vide le tube de collecte 7 ;
- une sous-étape de régulation de température, mise en œuvre par le dispositif de régulation de température 10, consistant à réguler la température du tube de collecte 7 à une température de fonctionnement souhaitée ;
- une sous-étape de mise en place, mise en œuvre par le module de déplacement 32, consistant à placer la sonde de collecte 2 dans la traînée de condensation 5 ;
- une sous-étape d'ouverture de la vanne de la sonde de collecte 2.

Par ailleurs, l'étape E4 de collecte peut être suivie d'une étape de mesure par le ou les dispositifs de mesure 12 d'au moins un paramètre caractéristique des échantillons 4 dans la chambre de collecte 6.

La chambre de collecte 6 peut contenir une chambre d'échantillonnage dans laquelle les mesures peuvent être réalisées. De même, un tube d'échantillonnage contenu dans la chambre d'échantillonnage peut permettre de prélever des échantillons de la chambre de collecte 6 afin de les stocker à une température de fonctionnement souhaitée pour des analyses complémentaires.

Grâce au système 1 et au procédé, il n'est pas nécessaire d'utiliser un deuxième aéronef qui suit l'aéronef AC dont on veut analyser les traînées de condensation 5. De plus, une sonde placée loin derrière l'aéronef AC n'aurait pas permis l'étude de la nature des échantillons 4. Le système 1 et le procédé évitent également le montage d'un spectromètre sur la queue de l'aéronef AC pour mesurer la nature chimique des traînées de condensation 5 derrière l'aéronef AC. En effet, un spectromètre placé à cet endroit n'aurait pas permis d'obtenir des indications sur la nature, la formation et la densité des cristaux de glace contenus dans les échantillons 4.

## Revendications

1. Système d'échantillonnage et d'analyse de traînée de condensation générée par au moins un réacteur d'un aéronef en vol,
**caractérisé en ce que** ledit système est configuré pour être embarqué à bord de l'aéronef (AC) et que ledit système comprend au moins :
- une sonde de collecte (2) configurée pour collecter des échantillons (4) de la traînée de condensation (5) générée par ledit réacteur dudit aéronef en vol ;
- un dispositif de fixation (3), la sonde de collecte (2) étant configurée pour être fixée sur l'aéronef (AC) par le dispositif de fixation (3), le dispositif de fixation (3) comprenant :
• un support (31) configuré pour être fixé sur le fuselage de l'aéronef (AC) et
• un module de déplacement (32) fixé sur le support (31), dans lequel le module de déplacement (32) est configuré pour déplacer la sonde de collecte (2) par rapport à l'aéronef (AC) vers une position dans laquelle la sonde de collecte (2) se trouve dans la traînée de condensation (5) ;
- une chambre de collecte (6) configurée pour recueillir les échantillons (4) collectés par la sonde de collecte (2) ;
- un tube de collecte (7) configuré pour conduire les échantillons (4) de la sonde de collecte (2) vers la chambre de collecte (6) ;
- au moins un premier dispositif de mesure (8) configuré pour mesurer au moins un paramètre caractérisant les échantillons (4) dans le tube de collecte (7) pendant que lesdits échantillons sont conduits de la sonde de collecte (2) vers la chambre de collecte (6).

2. Système selon la revendication 1,
**caractérisé en ce que** ledit système comprend une pompe à vide (9) configurée pour entraîner les échantillons (4) de la sonde de collecte (2) à la chambre de collecte (6).

3. Système selon l'une quelconque des revendications 1 et 2,
**caractérisé en ce que** ledit système comprend un dispositif de régulation de température (10) configuré pour maintenir l'intérieur du tube de collecte (7) à une température de fonctionnement souhaitée.

4. Système selon la revendication 3,
**caractérisé en ce que** le dispositif de régulation de température (10) comprend un tube isolant (11) enveloppant au moins en partie le tube de collecte (7), le tube isolant (11) étant configuré pour faire circuler un fluide frigorigène ou un mélange de fluide frigorigène et d'air entre le tube de collecte (7) et le tube isolant (11).

5. Système selon l'une quelconque des revendications 1 à 4,
**caractérisé en ce que** le ou chacun des premiers dispositifs de mesure (8) comprend une première unité de mesure (81) configurée pour déterminer au moins un paramètre caractéristique d'une composition chimique des échantillons (4).

6. Système selon l'une quelconque des revendications 1 à 5,
**caractérisé en ce que** le ou chacun des premiers dispositifs de mesure (8) comprend une deuxième unité de mesure (82) configurée pour déterminer au moins un paramètre caractéristique d'une granulométrie de particules contenus dans les échantillons (4).

7. Système selon l'une quelconque des revendications 1 à 6,
**caractérisé en ce que** la chambre de collecte (6) est configurée pour être maintenue à une température de conservation des échantillons (4) recueillis dans la chambre de collecte (6).

8. Système selon l'une quelconque des revendications 1 à 7,
**caractérisé en ce que** ledit système comprend au moins un deuxième dispositif de mesure (12) configuré pour mesurer au moins un paramètre caractéristique des échantillons (4) recueillis dans la chambre de collecte (6).

9. Système selon la revendication 8,
**caractérisé en ce que** le ou chacun des deuxièmes dispositifs de mesure (12) comprend une troisième unité de mesure (121) configurée pour déterminer un paramètre caractéristique d'une composition chimique des échantillons (4).

10. Système selon l'une quelconque des revendications 8 et 9,
**caractérisé en ce que** le ou chacun des deuxièmes dispositifs de mesure (12) comprend une quatrième unité de mesure (122) configurée pour déterminer un paramètre caractéristique de propriétés optiques des échantillons (4).

11. Système selon la revendication 1,
**caractérisé en ce que** le module de déplacement (32) comprend une tige rétractable (33) présentant une première extrémité à laquelle est fixée la sonde de collecte (2), la tige rétractable (33) étant configurée pour prendre alternativement au moins une première configuration dans laquelle la tige rétractable (33) est déployée pour amener la sonde de collecte (2) dans une première position (C1) dans laquelle la sonde de collecte (2) se trouve dans la traînée de condensation (5) et une deuxième configuration dans laquelle la tige rétractable (33) est rétractée pour éloigner la sonde de collecte (2) de la traînée de condensation (5) dans une deuxième position (C2).

12. Système selon l'une quelconque des revendications 1 et 11,
**caractérisé en ce que** le module de déplacement (32) comprend une tige articulée (35), la tige articulée (35) présentant une première extrémité comprenant une articulation (34) fixée au support (31) et une deuxième extrémité à laquelle la sonde de collecte (2) est fixée, l'articulation (34) étant configurée pour déplacer la sonde de collecte (2) alternativement au moins entre une troisième position (P1) dans laquelle la sonde de collecte (2) se trouve dans la traînée de condensation (5) et une quatrième position (P2) dans laquelle la sonde de collecte (2) est écartée de la traînée de condensation (5).

13. Procédé d'utilisation du système d'échantillonnage et d'analyse de traînée de condensation générée par au moins un réacteur d'un aéronef en vol selon l'une quelconque des revendications 1 à 12,
**caractérisé en ce que** ledit procédé comprend les étapes suivantes :
- une étape (E1) de collecte, par la sonde de collecte (2), d'échantillons (4) de la traînée de condensation (5) générée par ledit réacteur dudit aéronef en vol ;
- une étape (E2) de conduite, par le tube de collecte (7), des échantillons (4) collectés par la sonde de collecte (2) vers la chambre de collecte (6) ;
- au moins une étape (E3) de mesure par le ou les premiers dispositifs de mesure (8) d'au moins un paramètre caractéristique des échantillons (4) dans le tube de collecte (7) pendant que lesdits échantillons sont conduits de la sonde de collecte (2) vers la chambre de collecte (6) ;
- une étape (E4) de collecte dans la chambre de collecte (6) des échantillons (4) collectés par la sonde de collecte (2) et conduits par le tube de collecte (7).

14. Aéronef,
**caractérisé en ce que** ledit aéronef comporte un système d'échantillonnage et d'analyse (1) selon l'une quelconque des revendications 1 à 12.

## Patentansprüche

1. System zur Probenahme und Analyse von Kondensstreifen, die von mindestens einem Triebwerk eines Luftfahrzeugs im Flug erzeugt werden,
**dadurch gekennzeichnet, dass** das System konfiguriert ist, um an Bord des Luftfahrzeugs (AC) eingebaut zu werden, und dass das System mindestens umfasst:
- eine Sammelsonde (2), die konfiguriert ist, um Proben (4) des Kondensstreifens (5) zu sammeln, der durch das Triebwerk des Luftfahrzeugs im Flug erzeugt wird;
- eine Befestigungsvorrichtung (3), wobei die Sammelsonde (2) konfiguriert ist, um durch die Befestigungsvorrichtung (3) an dem Luftfahrzeug (AC) befestigt zu werden, wobei die Befestigungsvorrichtung (3) umfasst:
- einen Träger (31), der konfiguriert ist, um am Rumpf des Luftfahrzeugs (AC) befestigt zu werden, und
- ein Bewegungsmodul (32), das an dem Träger (31 ) befestigt ist, wobei das Bewegungsmodul (32) konfiguriert ist, um die Sammelsonde (2) in Bezug auf das Luftfahrzeug (AC) in eine Position zu bewegen, in der sich die Sammelsonde (2) innerhalb des Kondensstreifens (5) befindet;
- eine Sammelkammer (6), die konfiguriert ist, um die von der Sammelsonde (2) gesammelten Proben (4) aufzunehmen;
- ein Sammelrohr (7), das konfiguriert ist, die Proben (4) von der Sammelsonde (2) zu der Sammelkammer (6) zu leiten;
- mindestens eine erste Messvorrichtung (8), die konfiguriert ist, um mindestens einen Parameter zu messen, der die Proben (4) in dem Sammelrohr (7) charakterisiert, während die Proben von der Sammelsonde (2) zu der Sammelkammer (6) geleitet werden.

2. System nach Anspruch 1,
**dadurch gekennzeichnet, dass** das System eine Vakuumpumpe (9) umfasst, die konfiguriert ist, um die Proben (4) von der Sammelsonde (2) zu der Sammelkammer (6) anzutreiben.

3. System nach einem der Ansprüche 1 und 2,
**dadurch gekennzeichnet, dass** das System eine Temperaturregulierungsvorrichtung (10) umfasst, die konfiguriert ist, um das Innere des Sammelrohrs (7) auf einer gewünschten Betriebstemperatur zu halten.

4. System nach Anspruch 3,
**dadurch gekennzeichnet, dass** die Temperaturregulierungsvorrichtung (10) ein Isolierrohr (11) umfasst, das mindestens teilweise das Sammelrohr (7) umhüllt, wobei das Isolierrohr (11) konfiguriert ist, um ein Kältemittel oder ein Gemisch aus Kältemittel und Luft zwischen dem Sammelrohr (7) und dem Isolierrohr (11) zirkulieren zu lassen.

5. System nach einem der Ansprüche 1 bis 4,
**dadurch gekennzeichnet, dass** die oder jede der ersten Messvorrichtungen (8) eine erste Messeinheit (81) umfasst, die konfiguriert ist, um mindestens einen Parameter zu bestimmen, der für eine chemische Zusammensetzung der Proben (4) charakteristisch ist.

6. System nach einem der Ansprüche 1 bis 5,
**dadurch gekennzeichnet, dass** die oder jede der ersten Messvorrichtungen (8) eine zweite Messeinheit (82) umfasst, die konfiguriert ist, um mindestens einen Parameter zu bestimmen, der für eine Körnung von in den Proben (4) enthaltenen Partikeln charakteristisch ist.

7. System nach einem der Ansprüche 1 bis 6,
**dadurch gekennzeichnet, dass** die Sammelkammer (6) konfiguriert ist, um auf einer Temperatur zur Konservierung der in der Sammelkammer (6) aufgenommenen Proben (4) gehalten zu werden.

8. System nach einem der Ansprüche 1 bis 7,
**dadurch gekennzeichnet, dass** das System mindestens eine zweite Messvorrichtung (12) umfasst, die konfiguriert ist, um mindestens einen Parameter zu messen, der für die in der Sammelkammer (6) aufgenommenen Proben (4) charakteristisch ist.

9. System nach Anspruch 8,
**dadurch gekennzeichnet, dass** die oder jede der zweiten Messvorrichtungen (12) eine dritte Messeinheit (121) umfasst, die konfiguriert ist, um einen Parameter zu bestimmen, der für eine chemische Zusammensetzung der Proben (4) charakteristisch ist.

10. System nach einem der Ansprüche 8 und 9,
**dadurch gekennzeichnet, dass** die oder jede der zweiten Messvorrichtungen (12) eine vierte Messeinheit (122) umfasst, die konfiguriert ist, um einen Parameter zu bestimmen, der für die optischen Eigenschaften der Proben (4) charakteristisch ist.

11. System nach Anspruch 1,
**dadurch gekennzeichnet, dass** das Bewegungsmodul (32) eine einziehbare Stange (33) umfasst, die ein erstes Ende aufweist, an dem die Sammelsonde (2) befestigt ist, wobei die einziehbare Stange (33) konfiguriert ist, um abwechselnd mindestens eine erste Konfiguration, bei der die einziehbare Stange (33) ausgefahren ist, um die Sammelsonde (2) in eine erste Position (C1) zu bringen, in der sich die Sammelsonde (2) in dem Kondensstreifen (5) befindet, und eine zweite Konfiguration, bei der die einziehbare Stange (33) eingezogen ist, um die Sammelsonde (2) in einer zweiten Position (C2) von dem Kondensstreifen (5) wegzubewegen, anzunehmen.

12. System nach einem der Ansprüche 1 und 11,
**dadurch gekennzeichnet, dass** das Bewegungsmodul (32) eine Gelenkstange (35) umfasst, wobei die Gelenkstange (35) ein erstes Ende aufweist, das ein an dem Träger (31) befestigtes Gelenk (34) umfasst, und ein zweites Ende, an dem die Sammelsonde (2) befestigt ist, wobei das Gelenk (34) konfiguriert ist, um die Sammelsonde (2) abwechselnd mindestens zwischen einer dritten Position (P1), in der sich die Sammelsonde (2) in dem Kondensstreifen (5) befindet, und einer vierten Position (P2), in der die Sammelsonde (2) von dem Kondensstreifen (5) beabstandet ist, zu bewegen.

13. Verfahren zur Verwendung des Systems zur Probenahme und Analyse von Kondensstreifen, die von mindestens einem Triebwerk eines Luftfahrzeugs im Flug erzeugt werden, nach einem der Ansprüche 1 bis 12,
**dadurch gekennzeichnet, dass** das Verfahren die folgenden Schritte umfasst:
- einen Schritt (E1) des Sammelns, durch die Sammelsonde (2), von Proben (4) des Kondensationsstreifens (5), der durch das Triebwerk des Luftfahrzeugs im Flug erzeugt wird;
- einen Schritt (E2) des Leitens, durch das Sammelrohr (7), der durch die Sammelsonde (2) gesammelten Proben (4) zur Sammelkammer (6);
- mindestens einen Schritt (E3) des Messens durch die erste(n) Messvorrichtung(en) (8) von mindestens einem charakteristischen Parameter der Proben (4) in dem Sammelrohr (7), während die Proben von der Sammelsonde (2) zu der Sammelkammer (6) geleitet werden;
- einen Schritt (E4) des Sammelns in der Sammelkammer (6) der Proben (4), die von der Sammelsonde (2) gesammelt und durch das Sammelrohr (7) geleitet wurden.

14. Luftfahrzeug,
**dadurch gekennzeichnet, dass** das Luftfahrzeug ein System zur Probenahme und Analyse (1) nach einem der Ansprüche 1 bis 12 umfasst.

## Claims

1. A system for sampling and analyzing condensation trail generated by at least one jet engine of an aircraft in flight,
wherein said system is configured to be embedded onboard the aircraft (AC) and said system comprises at least:
- a collection probe (2) configured to collect samples (4) of the condensation trail (5) generated by said jet engine of said aircraft in flight;
- a fixing device (3), the collection probe (2) being configured to be fixed to the aircraft (AC) by the fixing device (3), the fixing device (3) comprising:
• a support (31) configured to be fixed to the fuselage of the aircraft (AC) and
• a movement module (32) fixed to the support (31), wherein the movement module (32) is configured to move the collection probe (2) with respect to the aircraft (AC) to a position in which the collection probe (2) is located in the condensation trail (5);
- a collection chamber (6) configured to gather the samples (4) collected by the collection probe (2);
- a collection tube (7) configured to conduct the samples (4) from the collection probe (2) to the collection chamber (6);
- at least one first measurement device (8) configured to measure at least one parameter characterizing the samples (4) in the collection tube (7) while said samples are conducted from the collection probe (2) to the collection chamber (6).

2. The system as claimed in claim 1,
wherein said system comprises a vacuum pump (9) configured to drive the samples (4) from the collection probe (2) to the collection chamber (6).

3. The system as claimed in either one of claims 1 and 2,
wherein said system comprises a temperature regulation device (10) configured to maintain the interior of the collection tube (7) at a desired operating temperature.

4. The system as claimed in claim 3,
wherein the temperature regulation device (10) comprises an insulating tube (11) at least partly jacketing the collection tube (7), the insulating tube (11) being configured to circulate a refrigerant or a mix of refrigerant and air between the collection tube (7) and the insulating tube (11).

5. The system as claimed in any one of claims 1 to 4,
wherein the or each of the first measurement devices (8) comprises a first measurement unit (81) configured to determine at least one parameter characteristic of a chemical composition of the samples (4).

6. The system as claimed in any one of claims 1 to 5,
wherein the or each of the first measurement devices (8) comprises a second measurement unit (82) configured to determine at least one parameter characteristic of a particle size analysis of particles contained in the samples (4).

7. The system as claimed in any one of claims 1 to 6,
wherein the collection chamber (6) is configured to be maintained at a temperature of conservation of the samples (4) gathered in the collection chamber (6).

8. The system as claimed in any one of claims 1 to 7,
wherein said system comprises at least one second measurement device (12) configured to measure at least one parameter characteristic of the samples (4) gathered in the collection chamber (6).

9. The system as claimed in claim 8,
wherein the or each of the second measurement devices (12) comprises a third measurement unit (121) configured to determine a parameter characteristic of a chemical composition of the samples (4).

10. The system as claimed in either one of claims 8 and 9,
wherein the or each of the second measurement devices (12) comprises a fourth measurement unit (122) configured to determine a parameter characteristic of optical properties of the samples (4).

11. The system as claimed in claim 1,
wherein the movement module (32) comprises a retractable rod (33) having a first end to which the collection probe (2) is fixed, the retractable rod (33) being configured to alternately assume at least a first configuration in which the retractable rod (33) is extended to bring the collection probe (2) into a first position (C1) in which the collection probe (2) is located in the condensation trail (5) and a second configuration in which the retractable rod (33) is retracted to distance the collection probe (2) from the condensation trail (5) in a second position (C2).

12. The system as claimed in either one of claims 1 and 12,
wherein the movement module (32) comprises an articulated rod (35), the articulated rod (35) having a first end comprising an articulation (34) fixed to the support (31) and a second end to which the collection probe (2) is fixed, the articulation (34) being configured to move the collection probe (2) alternately at least between a third position (P1) in which the collection probe (2) is located in the condensation trail (5) and a fourth position (P2) in which the collection probe (2) is separated from the condensation trail (5).

13. A method for using a system for sampling and analyzing condensation trail generated by at least one jet engine of an aircraft in flight as claimed in any one of claims 1 to 12,
wherein said method comprises the following steps:
- a step (E1) of collection, by the collection probe (2), of samples (4) of the condensation trail (5) generated by said jet engine of said aircraft in flight;
- a step (E2) of conducting, by the collection tube (7), of the samples (4) collected by the collection probe (2) to the collection chamber (6);
- at least one step (E3) of measurement, by the first measurement device or devices (8), of at least one parameter characteristic of the samples (4) in the collection tube (7) while said samples are conducted from the collection probe (2) to the collection chamber (6);
- a step (E4) of collection, in the collection chamber (6), of the samples (4) collected by the collection probe (2) and conducted by the collection tube (7).

14. An aircraft,
wherein said aircraft comprises a sampling and analysis system (1) as claimed in any one of claims 1 to 12.
